Europäisches Patentamt

European Patent Office

Office européen des brevets

(19)

(11) Publication number: **0 011 970**

**A1**

(12) # EUROPEAN PATENT APPLICATION

(21) Application number: **79302613.9**

(22) Date of filing: **16.11.79**

(51) Int. Cl.³: **G 01 K 1/14**
**G 01 K 5/70, G 01 L 19/00**
**G 12 B 9/08, G 01 D 11/30**

(30) Priority: **23.11.78 GB 4573278**

(43) Date of publication of application:
**11.06.80 Bulletin 80/12**

(84) Designated Contracting States:
**BE DE FR IT LU NL**

(71) Applicant: **THE BRITISH ROTOTHERM COMPANY
LIMITED**
**Margam, Port Talbot**
**West Glamorgan, South Wales(GB)**

(72) Inventor: **Gilbert, John Joseph**
**98, West Park Drive Porthcawl**
**Mid Glamorgan, Wales(GB)**

(74) Representative: **Cone, John Morant et al,**
**REDDIE & GROSE 16 Theobalds Road**
**London WCIX 8PL(GB)**

(54) **Connecting assembly and its application to a thermometer.**

(57) A rigid stem dial gauge, such as a thermometer has an assembly which connects the stem to the head and permits the two parts to be disposed at a range of angles to each other. The assembly comprises a pair of cylindrical housings, one mounted coaxially and rotatably within the other, the inner housing 12 being connected to the system shaft 16 of the gauge and the outer housing being connected to the pointer shaft 17 of the head. The two shafts are inter connected by a flexible drive 19 accommodated within the housings.

FIG. 1

- 1 -

**TITLE MODIFIED**
see front page      "THERMOMETERS"

The present invention relates to gauges, such as thermometers and, in particular, to a connection assembly for rigid stem, dial gauges.

The invention can be embodied in a variety of sensing instruments, e.g., liquid-filled, gas-filled, mercury-in-steel, vapour pressure, liquid expansion and pressure gauges, in addition to thermometers.

– 2 –

Problems are sometimes encountered in siting rigid stem thermometer particularly bi-metal thermometers, if pipe work or other obstructions prevent the use of normal vertical or coaxial thermometers.

It is an object of the present invention to provide an assembly for connecting a stem and a head of a rigid stem dial gauge which enables the stem to be disposed at a range of angles with resepct to the head.

According to the present invention there is provided an assembly for connecting a stem and head of a rigid stem gauge comprising two cylindrical housings, one mounted coaxially and rotatable within the other, the inner housing accommodating a flexible drive which extends between a fixed point on the cylindrical surface of the inner housing at which means are provided for connecting the drive either to the stem or to the head and a fixed point on the cylindrical surface of th outer housing at which means are provided for connecting the drive either to the stem or to the head, each housing having an arcuate slot in its cylindrical surface through which the flexibl drive passes and which enables the position of the two fixed points to be varied relative to each other.

Preferably, the assembly includes a flexible cover of rubber or plastics material which surrounds the two housings to prevent the ingress of dirt or moisture.

The invention will now be described by way of example, with reference to the accompanying drawings, in which:-

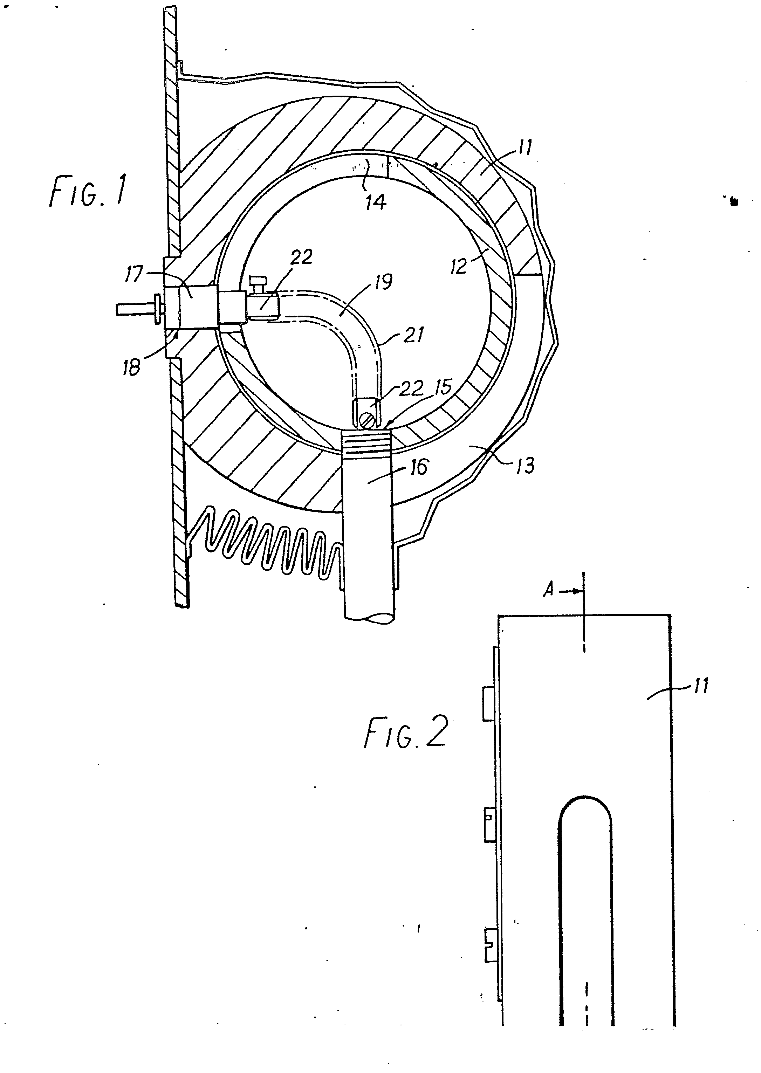

Figure 1 is a vertical section through a thermometer assembly embodyi the invention and taken on the line I – I in Figure 2, and

Figure 2 is an end-on elevation of the thermometer with the protective bellows and stems omitted.

The assembly comprises two cylindrical housings 11 and 12, the housing 12 being mounted coaxially inside the housing 11, with the inner surface of the latter in sliding contact with the outer surface of the former. The housing 12 is rotatable within the housing 11 about their common axis. The housings 11 and 12 each have a slot 13 and 14 respectively in their cylindrical surfaces that extends around a cylindrical arc subtending an angle of just more than $90^O$ at the axis of the cylinder.

Attached to the inner housing 12 at 15 is a system shaft 16 of a stem of a thermometer and a pointer shaft 17 of the head (not shown) of the thermometer is attached to the outer housing 11 at 18. The head 17 is connected to the stem 16 by a flexible drive 19 accommodated within the inner housing 12 and passing through the slot 14 to reach the head 17. The stem 16 passes through the slot 13 to reach the flexible drive 19.

The flexible drive 19 comprises a phospher bronze, helically wound spring 21 with brass bushes 22 at each end, which are clamped to the system shaft 16 and pointer shaft 17 respectively. The slots 13 and 14 enable the stem to be disposed at any angle between $90^O$ and $180^O$ with respect to the pointer shaft 17. The housings 11 and 12 are held in the desired orientation by three locking screws 23 which are tapped into one end of the inner housing 12 and which clamp a circular cover plate 24 to the housing 11.

The housing 11 is securely fixed to the body 25 of the thermometer and the assembly covered by a flexible rubber boot 26 that prevents the ingress of moisture or dust.

The assembly is preferably manufactured of stainless steel, but mild steel, brass or aluminium could be used.

## CLAIMS

1. An assembly for connecting a stem and a head of a rigid stem gauge comprising two housings, each having rotational symmetry about an axis, one mounted coaxially and rotatably within the other, the inner housing accommodating a flexible drive which extends between a fixed point on the curved surface of the inner housing at which means are provided for connecting the drive either to the stem or to the head, and a fixed point on the cylindrical surface of the outer housing at which means are provided for connecting the drive either to the stem or the head, each housing having an arcuate in its curved surface through which the flexible drive passes and which enables the position of the two fixed points to be varied relative to each other.

2. An assembly according to claim 1 wherein the housings are cylindrical.

3. An assembly according to claim 1 or 2 wherein the fixed point on the outer housing is adapted to be connected to the head and the fixed point on the inner housing is adopted to be connected to the stem.

4. An assembly according to any of the preceding claims including a flexible cover of rubber or plastics material which surrounds the two housings to prevent the ingress of dirt or moisture.

5. An assembly substantially as hereinbefore described with reference to and as illustrated in the accompanying drawings.

6.    A rigid dial thermometer wherein the stem and the head are inter connected by means of an assembly according to any of the preceding claims.

1/1

0011970

FIG.1

FIG.2

## DOCUMENTS CONSIDERED TO BE RELEVANT

| Category | Citation of document with indication, where appropriate, of relevant passages | Relevant to claim |
|---|---|---|
| X | <u>US - A - 2 524 894</u> (E.P. DOBRIN) <br> * Heading; column 2, line 15 - column 4, line 2; figures 1-4 * | 1,5,6 |
| X | <u>US - A - 2 790 617</u> (P.W. HARLAND) <br> * Heading; column 2, line 67 - column 4, line 66; figures 1-5 * | 1,3,5,6 |
| X | <u>GB - A - 110 479</u> (L.E. COWEY) <br> * Page 2, heading; line 36 - page 3, line 17; figures 1,2 * | 1-3,5 |
| X | <u>CH - A - 232 421</u> (W. SCHLAFHORST & CO.) <br> * Heading; page 2, lines 58-71; figure 2 * | 1,3-5 |
| A | <u>US - A - 2 925 734</u> (J.E. GORGENS) <br> * Heading; entirety of the application; figures 1-3,8-10 * | 1 |
| A | <u>US - A - 3 797 315</u> (W.J. HALPERN) <br> * Heading; entirety of the application; figures 1-3 * | 1 |

**CLASSIFICATION OF THE APPLICATION (Int. Cl. 3)**

G 01 K 1/14
5/70
G 01 L 19/00
G 12 B 9/08
G 01 D 11/30

**TECHNICAL FIELDS SEARCHED (Int.Cl. 3)**

G 01 K 1/14
5/70
5/48
5/32
G 01 L 19/00
G 01 D 11/30
G 12 B 9/08
F 16 D 3/18
F 16 C 1/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> The Hague | Date of completion of the search <br> 28-02-1980 | Examiner <br> VISSER | |